# EUROPÄISCHE PATENTSCHRIFT

(11) **EP 0 785 915 B1**
(45) Veröffentlichungstag und Bekanntmachung des Hinweises auf die Patenterteilung: **24.03.1999**
(21) Anmeldenummer: 95933314.7
(22) Anmeldetag: 30.09.1995
(51) Int. Cl.: C04B 20/10

(54) **KÖRNIGES SCHÜTTGUT, VERFAHREN ZU SEINER HERSTELLUNG UND VERWENDUNG**
GRANULAR BULK MATERIAL, PROCESS FOR ITS PRODUCTION AND ITS USE
PRODUIT GRANULE EN VRAC, SON PROCEDE DE PRODUCTION ET SON UTILISATION

(30) Priorität: 10.10.1994 DE 4436043
(43) Veröffentlichungstag der Anmeldung: 30.07.1997
(73) Patentinhaber: Deutsche Perlite GmbH, 44147 Dortmund (DE); Gossler Thermal Ceramics GmbH, 21465 Reinbek (DE)
(72) Erfinder: NIEMANN, Rolf, D-58313 Herdecke (DE); KLINGE, Bernd, D-04155 Leipzig (DE); BAUMANN, Reinhard, D-22946 Trittau (DE)
(74) Vertreter: Becker, Thomas, Dr., Dipl.-Ing.
(86) Internationale Anmeldenummer: DE9501369
(87) Internationale Veröffentlichungsnummer: WO9611171

(56) Entgegenhaltungen:
- EP-A- 0 086 248
- DE-A- 3 046 578
- DE-C- 3 614 943
- GB-A- 2 091 592
- DATABASE WPI Section Ch, Week 8806, Derwent Publications Ltd., London, GB; Class L02, AN 88-039023 & JP,A,62 296 939 ( MITSUISHI TAIKARENG) 24. Dezember 1987

## Beschreibung

Die Erfindung betrifft ein körniges Schüttgut aus anorganischen Matrixkörnern mit einem porösen Korngerüst.

Ein derartiges Schüttgut aus geblähtem Perlit, Vermiculit, Bims, Blähton, Schaumglas oder dergleichen zählt zum Stand der Technik. Es kann oberflächlich beschichtet sein, beispielsweise durch Bitumen (Produkt "Bituperl" der Perlite-Dämmstoff GmbH & Co Beratung und Vertrieb, Dortmund) oder eine glasierte Oberfläche aufweisen (DE-C-36 14 943). Das Schüttgut aus glasierten Perlitkörnern kann als Zuschlag bei der Herstellung von Tonziegeln verwendet werden.

Aufgrund der hohen Porosität weisen die genannten Schüttgüter gute thermische Isoliereigenschaften auf und finden entsprechend weitere Anwendungen in Wärmedämmputzen oder -mörteln. Da beispielsweise ein geblähtes Perlitkorn selbst nur bis circa 1.000° C beständig ist, folgt daraus, daß entsprechende Materialien bisher allenfalls für Anwendungen bis maximal 1.000° C eingesetzt wurden.

Die DE 30 46 578 A1 beschreibt ein geblähtes Perlitmaterial, welches von einem Salz, nämlich Monoaluminiumphosphat, ummantelt ist, wobei die Ummantelung zusätzlich einen feuerbeständigen Füllstoff aus Magnesiumoxid oder Aluminium-oxidhydrat enthält. Das Material wird bei Temperaturen bis 300° C thermisch nachbbehandelt.

Die EP 0 086 248 A1 beschreibt ein Granulat, welches glasiert ist. Ein ungeblähtes Material wie Perlit wird glasiert und anschließend bis zur Blähung thermisch behandelt.

Dem abstract Database WPI, Section Ch, Week 8806, Derwent Publication, Class L02, AN 88-039023 sind geblähte Perlitkörner mit einer Beschichtung zu entnehmen, die aus einer Mischung von kolloidaler Kieselsäure und Calciumcarbonat besteht. Beim anschließenden Brand bei 1.650° C entsäuert das Carbonat zum Oxid.

Der Erfindung liegt die Aufgabe zugrunde, die guten thermischen Eigenschaften der genannten porösen Schüttgüter auch für höhere Anwendungstemperaturen zu nutzen und entsprechend ein körniges Schüttgut zur Verfügung zu stellen, welches unter Beibehaltung der geringen Rohdichte der einzelnen Matrixkörner und möglichst geringer Schüttdichte des Schüttgutes auch im Feuerfestbereich (oberhalb 1.000° C) eingesetzt werden kann.

Dabei liegt der Erfindung die Überlegung zugrunde, die anorganischen Matrixkörner mit porösem Korngerüst auf der Oberfläche mit einer thermischen Schutzschicht auszubilden, die das poröse Korngerüst auch bei Anwendungstemperaturen oberhalb 1.000° C schützt. Dabei hat sich herausgestellt, daß auch dann, wenn das Schüttgut über längere Zeit höheren Temperaturen ausgesetzt wird, die Feuerfestigkeit nicht verlorengeht, obwohl das innere Korngerüst zum Teil seine ursprüngliche Stabilität verliert. Die feuerfeste Beschichtung bleibt in diesem Fall als stabiler "Mantel" erhalten, so daß das einzelne Korn weiter seine Funktion erfüllen kann.

Die Oberflächenbeschichtung des Korngerüstes kann erfindungsgemäß auf zwei alternativen Wegen ausgebildet werden. In einer ersten Ausführungsform wird die hochtemperaturbeständige Beschichtung durch Koagulation einer kolloidalen Lösung mit einer feuerfeste Oxide enthaltenden oder bildenden Dispersion gebildet. Die kolloidale Lösung (auch als Sol bezeichnet) wird dabei mit der Dispersion in Kontakt gebracht, wobei es zu einer Ausflockung (Koagulation) kommt und damit zu einem Übergang des Sols in ein Gel, welches nach Trocknung und Temperaturbehandlung die hochtemperaturbeständige Beschichtung ausbildet.

Anstelle der kolloidalen Lösung kann auch eine Metallsalzlösung mit der Dispersion in Kontakt gebracht werden und die Flockung auslösen.

Die Kolloidale Lösung besteht beispielsweise aus SiO₂, Al₂O₃, ZrO₂, MgO, TiO₂, einzeln oder in Mischung. Die Salzlösung basiert beispielsweise auf Nitraten, Phosphaten und Acetaten von Aluminium oder Zirkonium, einzeln oder in Mischung, in wässriger Lösung. Die genannte Dispersion ist beispielsweise auf Basis Al₂O₃, SiO_{2,} ZrO₂, TiO₂ und/oder MgO aufgebaut und besitzt vorzugsweise einen Anteil von Partikeln im Korngrößenbereich kleiner 100 nm.

Ein solches körniges Schüttgut läßt sich beispielsweise mit folgendem Verfahren herstellen:
- Auf die Oberfläche des Korngerüstes wird die kolloidale Lösung oder Salzlösung durch Sprühen oder Tränken aufgebracht,
- anschließend erfolgt ein Auftrag der feuerfeste Oxide enthaltenden oder bildenden Dispersion auf die zuvor mit der kolloidalen Lösung oder Salzlösung beschichtete Oberfläche des Korngerüstes,
- nach einer Koagulation der kolloidalen Lösung oder Salzlösung mit der Dispersion wird das Schüttgut getrocknet und bei Temperaturen kleiner 1.100° C gebrannt.

Die prozentualen Anteile der kolloidaien Lösung (oder Salzlösung) und der Dispersion sowie ihre Gesamtmenge hängen von dem jeweiligen Anwendungsfall ab. Die Gesamtmenge liegt üblicherweise zwischen 25 und 300 Gew.-%, bezogen auf das Gewicht der porösen Matrixkörner. Entscheidend ist, daß es zu einer in-situ-Gelbildung auf beziehungsweise in den Oberflächen des porösen Korngerüstes kommt, wodurch es nach entsprechender thermischer Behandlung zu einer kristallinstrukturierten dünnschichtigen Hülle um das (glasig) poröse Grundkorn kommt.

Vorteilhafte Anteile der beiden Beschichtungskomponenten liegen bei 1 bis 80 Gew.-% der kolloidalen Lösung (oder Salzlösung) beziehungsweise 50 bis 150 Gew.-% der Dispersion, jeweils bezogen auf das Matrixkorn.

Anstelle der genannten Dispersion kann auch unmittelbar ein Gel auf die Matrixkörner aufgebracht werden, die zuvor mit der kolloidalen Lösung (oder Salzlösung) beschichtet wurden. In diesem Fall wird die Dispersion vor dem Auftrag selbst zum Beispiel unter Zugabe einer kolloidalen Lösung zur Koagulation gebracht.

Eine weitere verfahrenstechnische Alternative besteht darin, feinteilige feuerfeste Oxidpulver in einem dritten Schritt auf die Oberflächenbeschichtung auf- beziehungsweise einzutragen. Die Teilchengröße der Feststoffpartikel innerhalb der kolloidalen Lösung sollte so klein wie möglich sein und vorzugsweise im Bereich < 100 nm liegen. Auch die Teilchengröße der feuerfesten Oxide in der Dispersion liegt vorzugsweise sehr niedrig, um die Reaktionsfähigkeit bei der Koagulation zu erhöhen. Als Obergrenze kann hier ein Wert von vorzugsweise 100 µm angegeben werden. Dies gilt auch für die gegebenenfalls nachträglich aufgebrachten feuerfesten Oxidpulver, die wiederum aus Al₂O₃, SiO₂, ZrO₂, MgO, TiO₂ oder vergleichbaren Oxiden, Oxidgemischen (beispielsweise Silikate, Silikatgemische) bestehen können.

Nach einer alternativen Ausführungsform weisen die Oberflächen des Korngerüstes eine Beschichtung auf, die durch Auftragen feinteiliger feuerfester oxidischer Pulver auf die zuvor mit der kolloidalen Lösung aus SiO₂, Al₂O₃, ZrO₂, MgO, TiO₂ einzeln oder in Mischung beschichteten Oberflächen des Korngerüstes gebildet wird. In diesem Fall werden die feuerfesten Pulver unmittelbar in der kolloidalen Haftschicht festgehalten. Nach einer thermischen Nachbehandlung bildet sich ebenfalls ein stabiler "Mantel" um das poröse Korngerüst der Körner aus, welches überraschend formstabil ist und auch bei hohen Temperaturen (über 1.000° C) kaum Schwindungsreaktionen zeigt. Soweit es bei höheren Temperaturen und längeren Anwendungszeiten zu einer teilweisen Auflösung der Glasphase des porösen Korngerüstes kommt, ist dies auch bei dieser Ausführungsform unschädlich, da der "Mantel" die Glasphase quasi "aufsaugt" und so "hohlkugelähnliche" Körper entstehen, die hohe isolierende Eigenschaften und eine hohe Temperaturbeständigkeit zeigen.

Die feuerfesten Oxide werden dabei nach Art einer "Panierung" auf die Haftschicht aus der kolloidalen Lösung aufgebracht. Dies kann durch Aufsprühen oder Granulieren in einem entsprechenden feinteiligen Oxidpulver erfolgen.

Das oxidische Pulver wird dabei nach einer Ausführungsform in einer Menge von 400 bis 300 Gew.-%, bezogen auf das Gewicht der porösen Matrixkörner, zugegeben. Vorteilhafte Anteile der kolloidalen Lösung liegen bei 100 bis 200 Gew.-%, bezogen auf das Gewicht der porösen Matrixkörner. Insgesamt ergibt sich bei dieser Ausführungsform also ein körniges Schüttgut mit größerer Rohdichte (Schüttdichte) als bei der erstgenannten Ausführungsform.

Die bereits erwähnte thermische Nachbehandlung ist für beide Ausführungsformen im wesentlichen gleich. Üblicherweise schließt sich an die Beschichtung der porösen Matrixkörner zunächst eim Trocknungsvorgang bei Temperaturen von beispielsweise 40 bis 100° C an. Der Trocknungsprozeß wird zweckmäßigerweise so geführt, bis die Klebewirkung der Beschichtung verlorengeht. Zur Ausbildung stabiler Strukturen (entwässerte Gele) und zur Ausbildung keramischer Phasen erfolgt anschließend eine weitere thermische Behandlung bei vorzugsweise 400 bis 1.300° C. Je nach Anwendungsbereich kann dieser Schritt aber auch erst bei der Anwendung erfolgen, zum Beispiel dann, wenn das Material als Abdeckmasse für metallurgische Schmelzen eingesetzt wird.

Ausgehend von einem geblähten Perlitkorn als anorganisches Matrixkorn lassen sich körnige Schüttungen mit einer Schüttdichte von 0,20 bis 0,55 g/cm³ erreichen, wobei die einzelnen Körner eine hohe Abriebfestigkeit aufweisen.

Bei einem körnigen Schüttgut, welches eine Beschichtung aus feuerfesten oxidischen Pulvern besitzt, die über eine kolloidale Haftschicht gebunden werden, liegt die Schüttdichte gegebenenfalls etwas höher und kann nach dem Brand Werte bis 0,8 g/cm³ erreichen.

Ein weiteres Merkmal des beschriebenen körnigen Schüttgutes besteht darin, daß das Material eine gute Aufnahmebereitschaft für Flüssigkeiten zeigt.

Die beschriebenen Verfahren können durch folgende Merkmale variiert werden:
- Die verwendete Dispersion kann als wässrige Dispersion eingesetzt werden, wobei der Wirkstoffgehalt in Abhängigkeit vom jeweiligen Anwendungsbereich beispielsweise zwischen 0,5 und 40 Gew.-% schwankt.
- Die Feststoffanteile der verwendeten Sole sollen so feinteilig wie möglich sein und können Werte unterhalb 20 nm aufweisen.
- Als vorteilhaft hat sich die Verwendung einer wässrigen Dispersion von kolloidalem Aluminiumoxid (Aluminiumoxid-Hydrat) mit einem wirksamen Al₂O₃-Gehalt zwischen 0,5 und 20 Gew.-% herausgestellt.
- Es können wässrige Salzlösungen zum Beispiel auf Basis von Monoaluminiumphosphat mit Wirkstoffgehalten zwischen 5 und 50 Gew.-% eingesetzt werden.
- Die feuerfesten feinteiligen Pulver können während der Gelbildung aufgebracht werden, wodurch ihre Einbindung (Haftung) verbessert wird.
- Wässrige Dispersionen von Tonerde-Monohydrat mit lockerer Böhmitstruktur führen ebenfalls zu den beschriebenen Effekten.
- Die feuerfesten Oxidpulver können auch aus Bauxit, Andalusit, Kyanit, Sillimanit, Mullit, Cordierit, Speckstein, Sepiolith, Pyrophyllit, Quarz, einzeln oder in Mischung bestehen.

Die beschriebenen Eigenschaften des erfindungsgemäßen körnigen Schüttgutes führen zu folgenden Anwendungsbereichen, beispielsweise:
- als Zuschlagstoff für Betone, insbesondere Feuerbetone,
- als wärmeisolierende Deckschicht auf metallurgischen Schmelzen,
- als Zuschlagstoff für feuerfeste Massen und Formteile.

Im jedem Fall wird die poröse Struktur einerseits und die hochtemperaturbeständige Beschichtung andererseits ausgenutzt.

Die Korngröße des Matrixkorns, beispielsweise eines geblähten Perlits, liegt im Bereich < 10 mm, vorzugsweise 1 bis 6 mm.

## Patentansprüche

1. Körniges Schüttgut aus anorganischen Matrixkörnern mit einem porösen Korngerüst, wobei die Oberflächen des Korngerüstes eine durch Koagulation einer kolloidalen Lösung oder Salzlösung mit einer, feuerfeste Oxide enthaltenden oder bildenden Dispersion gebildete hochtemperaturbeständige Beschichtung aufweisen.

2. Schüttgut nach Anspruch 1, bei dem die Beschichtung aus dem Reaktionsprodukt einer kolloidalen Lösung auf Basis SiO₂, Al₂O₃, ZrO₂, MgO, TiO₂, einzeln oder in Mischung oder einer Salzlösung auf der Basis von Nitraten, Phosphaten oder Acetaten von Aluminium oder Zirkonium mit einer Dispersion auf Basis Al₂O₃, SiO₂, ZrO₂, TiO₂, MgO, einzeln oder in Mischung besteht.

3. Schüttgut aus anorganischen Matrixkörnern mit einem porösen Korngerüst, wobei die Oberflächen des Korngerüstes eine durch Auftragen feinteiliger, feuerfester oxidischer Pulver auf die zuvor mit einer Haftschicht aus einer kolloidalen Lösung aus SiO₂, Al₂O₃, ZrO₂, MgO, TiO₂, einzeln oder in Mischung beschichteten oberflächen des Korngerüstes gebildete hochtemperaturbeständige Beschichtung aufweisen.

4. Schüttgut nach Anspruch 3, bei dem das oxidische Pulver aus Al₂O₃, SiO₂, ZrO₂, TiO₂, MgO, einzeln oder in Mischung besteht.

5. Schüttgut nach einem der Ansprüche 1 bis 4, bei dem die anorganischen Matrixkörner aus geblähtem Perlit bestehen.

6. Schüttgut nach einem der Ansprüche 1 bis 5, bei dem die Dispersion einen Anteil von Partikeln im Korngrößenbereich kleiner 100 nm aufweist.

7. Verfahren zur Herstellung eines körnigen Schüttgutes nach einem der Ansprüche 1, 2, 5 oder 6 mit folgenden Schritten:
7.1 Auf die Oberfläche des Korngerüstes wird eine kolloidale Lösung oder Salzlösung durch Sprühen oder Tränken aufgebracht,
7.2 anschließend erfolgt ein Auftrag einer, feuerfeste Oxide enthaltenden oder bildenden dispersion auf die zuvor mit der kolloidalen Lösung oder Salzlösung beschichtete Oberfläche des Korngerüstes,
7.3 nach einer Koagulation der kolloidalen Lösung cder Salzlösung mit der Dispersion wird das Schüttgut getrocknet und bei Temperaturen < 1.100° C gebrannt.

8. Verfahren nach Anspruch 7, bei dem die kolloidale Lösung oder Salzlösung und die Dispersion in einer Gesamtmenge von 25 bis 300 Gew.-%, bezogen auf das Gewicht der porösen Matrixkörner, aufgetragen werden.

9. Verfahren nach Anspruch 7 oder 8, bei dem feinteilige feuerfeste Oxidpulver auf die zuvor durch Koagulation ausgebildete Oberflächenbeschichtung auf- beziehungsweise eingetragen werden.

10. Verfahren nach einem der Ansprüche 7 bis 9, bei dem die, feuerfeste Oxide enthaltende oder bildende Dispersion vor dem Auftrag auf die mit der kolloidalen Lösung oder Salzlösung vorbeschichtete Oberfläche des Korngerüstes selbst unter Zugabe einer kolloidalen Lösung zur Koagulation gebracht wurde.

11. Verfahren nach einem der Ansprüche 7 bis 10, bei dem die Dispersion mit einer Metallsalzlösung (anstelle der kolloidalen Lösung) in Kontakt gebracht wird.

12. Verfahren zur Herstellung eines körnigen Schüttgutes nach einem der Ansprüche 3 bis 5 mit folgenden Schritten :
12.1 Auf die Oberfläche des Korngerüstes wird die kolloidale Lösung durch Sprühen oder Tauchen aufgebracht,
12.2 danach wird das feinteilige oxidische Pulver auf die mit der kolloidalen Lösung vorbeschichtete Oberfläche des Korngerüstes aufgetragen,
12.3 das so beschichtete Schüttgut wird anschließend getrocknet und bei Temperaturen zwischen 400 und < 1.100° C gebrannt.

13. Verfahren nach Anspruch 12, bei dem die kolloidale Lösung oder Salzlösung in einer Gesamtmenge von 100 bis 200 Gew.-% und das oxidische Pulver in einer Gesamtmenge von 400 bis 800 Gew.-%, jeweils bezogen auf das Gewicht der porösen Matrixkörner, aufgetragen werden.

14. Verwendung eines körnigen Schüttgutes nach einem der Ansprüche 1 bis 6 als Zuschlagstoff für Betone.

15. Verwendung eines körnigen Schüttgutes nach einem der Ansprüche 1 bis 6 als wärmeisolierende Deckschicht auf metallurgischen Schmelzen.

16. Verwendung eines körnigen Schüttgutes nach einem der Ansprüche 1 bis 6 als Zuschlagstoff für feuerfeste Massen und Formteile.

17. Verwendung eines körnigen Schüttguts nach einem der Ansprüche 1 bis 6 zur Wärmedämmung im Hoch- und Tiefbau.

18. Verwendung eines körnigen Schüttguts nach einem der Ansprüche 1 bis 6 für Filtrationszwecke.

19. Verwendung eines körnigen Schüttguts nach einem der Ansprüche 1 bis 6 in Katalysatoren.

## Claims

1. A granular bulk material of inorganic matrix particles having a porous particle skeleton, the surfaces of the particle skeleton having a high-temperature resistant coating formed by coagulating a colloid solution or a salt solution with a dispersion containing or forming refractory oxides.

2. The bulk material according to claim 1, wherein the coating consists of a reaction product of a colloid solution based on SiO₂, Al₂O₃, ZrO₂, MgO, TiO₂, individually or in mixture, or of a salt solution based on nitrates, phosphates or acetates of aluminum or zirkonium with a dispersion based on Al₂O₃, SiO₂, ZrO₂, TiO₂, MgO, individually or in mixture.

3. A bulk material of inorganic matrix particles having a porous particle skeleton, wherein the surfaces of the particle skeleton have a high-temperature resistant coating formed by applying fine, refractory, oxidic powders onto the surfaces of the particle skeleton, having been coated before with an adhesive layer of a colloid solution of SiO₂, Al₂O₃, ZrO₂, MgO, TiO₂, individually or in mixture.

4. The bulk material according to claim 3, wherein the oxidic powder is of Al₂O₃, SiO₂, ZrO₂, TiO₂, MgO, individually or in mixture.

5. The bulk material according to anyone of claims 1 to 4, wherein the inorganic matrix particles are of expanded perlite.

6. The bulk material according to anyone of claims 1 to 5, wherein the dispersion has portion of particles having a particle size of less than 100 nm.

7. A method for producing a granular bulk material according to anyone of claims 1, 2, 5 or 6, having the following steps:
7.1 a colloid solution or a salt solution is applied to the surface of the particle skeleton by spraying or impregnating,
7.2 then, a dispersion containing or forming refractory oxides is applied to the surface of the particle skeleton, having been coated before with the colloid solution or the salt solution,
7.3 after coagulating the colloid solution or the salt solution with the dispersion, the bulk material is dried and burned at temperatures < 1,100°C.

8. The method according to claim 7, wherein the colloid solution or salt solution and the dispersion are applied in a total amount of 25 to 300% by wt., based on the weight of the porous matrix particles.

9. The method according to claim 7 or 8, wherein fine, refractory oxide powders are applied or introduced to the surface coating previously formed by coagulation.

10. The method according to anyone of claims 7 to 9, wherein the dispersion containing or forming refractory oxides itself was coagulated by adding a colloid solution before being applied to the surface of the skeleton pre-coated with a colloid solution or salt solution.

11. The method according to anyone of claims 7 to 10, wherein the dispersion is brought into contact with a metallic salt solution (instead of the colloid solution).

12. A method for producing a granular bulk material according to anyone of claims 3 to 5, having the following steps:
12.1 the colloid solution is applied to the surface of the particle skeleton by spraying or impregnating,
12.2 then, the fine oxidic powder is applied to the surface of the particle skeleton, pre-coated with the colloid solution,
12.3 the bulk material being coated in such a manner is then dried and burned at temperatures from 400 to < 1,100°C.

13. The method according to claims 12, wherein the colloid solution or the salt solution is applied in a total amount of 100 to 200% by wt. and the oxidic powder is applied in a total amount of 400 to 800% by wt., based on the weight of the porous matrix particles, respectively.

14. Use of the bulk material according to anyone of claims 1 to 6 as an aggregate for concretes.

15. Use of the bulk material according to anyone of claims 1 to 6 as a heat-insulating cover for metallurgical melts.

16. Use of the bulk material according to anyone of claims 1 to 6 as an aggregate for refractory mixtures and formed pieces.

17. Use of the bulk material according to anyone of claims 1 to 6 for thermal insulation in building construction and civil and underground engineering.

18. Use of the bulk material according to anyone of claims 1 to 6 for filtering.

19. Use of the bulk material according to anyone of claims 1 to 6 in catalysts.

## Revendications

1. Produit en vrac constitué de grains matriciels minéraux avec un édifice granulaire poreux, les surfaces de l'édifice granulaire présentant un revêtement résistant aux températures élevées formé par coagulation d'une solution colloïdale ou d'une solution saline avec une dispersion contenant ou formant des oxydes réfractaires.

2. Produit en vrac selon la revendication 1, dans lequel le revêtement se compose du produit de réaction d'une solution colloïdale à base de SiO₂, de Al₂O₃, de ZrO₂, de MgO, de TiO₂, seuls ou en mélange, ou d'une solution saline à base de nitrates, de phosphates, ou d'acétates d'aluminium ou de zirconium avec une dispersion à base de Al₂O₃, de SiO₂, de ZrO₂, de TiO₂, de MgO, seuls ou en mélange.

3. Produit en vrac constitué de grains matriciels minéraux avec un édifice granulaire poreux, dans lequel les surfaces de l'édifice granulaire présentent un revêtement résistant aux températures élevées formé par application de poudres réfractaires finement dispersées, obtenues par voie d'oxydation, sur les surfaces de l'édifice granulaire préalablement revêtues d'une couche adhérente constituée d'une solution colloïdale à base de SiO₂, de Al₂O₃, de ZrO₂, de MgO, de TiO₂, seuls ou en mélange.

4. Produit en vrac selon la revendication 3, dans lequel la poudre formée par oxydation se compose de Al₂O₃, de SiO₂, de ZrO₂, de TiO₂, de MgO, seuls ou en mélange.

5. Produit en vrac selon l'une quelconque des revendications 1 à 4, dans lequel les grains matriciels minéraux sont constitués de perlite expansée.

6. Produit en vrac selon l'une quelconque des revendications 1 à 5, dans lequel la dispersion présente une fraction de particules comprises dans le domaine de granularité de moins de 100 nm.

7. Procédé de production d'un produit en vrac granulaire selon l'une quelconque des revendications 1, 2, 5 ou 6, comprenant les opérations suivantes:
7.1 Par pulvérisation ou imprégnation, on applique sur la surface de l'édifice granulaire une solution colloïdale ou une solution saline,
7.2 Ensuite, on réalise une enduction d'une dispersion contenant ou formant des oxydes réfractaires sur la surface de l'édifice granulaire préalablement revêtue de la solution colloïdale ou solution saline,
7.3 Après une coagulation de la solution colloïdale ou de la solution saline avec la dispersion, on sèche le produit en vrac et on le cuit à des températures < 1100 °C.

8. Procédé selon la revendication 7, suivant lequel la solution colloïdale ou la solution saline et la dispersion sont appliquées en une quantité totale de 25 à 300 % en poids, rapportée au poids des grains matriciels poreux.

9. Procédé selon la revendication 7 ou 8, suivant lequel des poudres d'oxydes réfractaires finement divisées sont appliquées ou incorporées sur ou dans le revêtement superficiel préalablement formé par coagulation.

10. Procédé selon l'une quelconque des revendications 7 à 9, suivant lequel la dispersion contenant ou formant des oxydes réfractaires a été amenée elle même à coaguler, sous adjonction d'une solution colloïdale, avant l'application sur la surface de l'édifice granulaire préalablement revêtue avec la solution colloïdale ou la solution saline.

11. Procédé selon l'une quelconque des revendications 7 à 10, suivant lequel la dispersion est mise en contact avec une solution de sels métalliques (au lieu de la solution colloïdale).

12. Procédé de production d'un produit en vrac granulaire selon l'une quelconque des revendications 3 à 5, comprenant les opérations suivantes:
12.1 Par pulvérisation ou immersion, on applique la solution colloïdale sur la surface de l'édifice granulaire,
12.2 Ensuite, la poudre finement divisée et formée par oxydation, est appliquée sur la surface de l'édifice granulaire préalablement revêtue avec la solution colloïdale,
12.3 Enfin, le produit en vrac ainsi revêtu est séché et cuit à des températures comprises entre 400 et < 1100 °C.

13. Procédé selon la revendication 12, suivant lequel la solution colloïdale ou la solution saline sont appliquées en une quantité totale de 100 à 200 % en poids, et la poudre formée par voie d'oxydation en une quantité totale de 400 à 800 % en poids, chaque fois par rapport au poids des grains matriciels poreux.

14. Mise en oeuvre d'un produit en vrac granulaire selon l'une quelconque des revendications 1 à 6, comme adjuvant pour bétons.

15. Mise en oeuvre d'un produit en vrac granulaire selon l'une quelconque des revendications 1 à 6, comme couche de revêtement thermo-isolante sur des bains de fusion métallurgiques.

16. Mise en oeuvre d'un produit en vrac granulaire selon l'une quelconque des revendications 1 à 6, comme adjuvant pour masses et pièces à mouler réfractaires.

17. Mise en oeuvre d'un produit en vrac granulaire selon l'une quelconque des revendications 1 à 6, comme isolant thermique dans les travaux publics et la construction de bâtiments.

18. Mise en oeuvre d'un produit en vrac granulaire selon l'une quelconque des revendications 1 à 6, à des fins de filtration.

19. Mise en oeuvre d'un produit en vrac granulaire selon l'une quelconque des revendications 1 à 6, dans des catalyseurs.
